# EUROPEAN PATENT APPLICATION

(11) **EP 4 722 035 A1**
(43) Date of publication of application: **08.04.2026**
(21) Application number: 25204546.3
(22) Date of filing: 25.09.2025
(51) Int. Cl.: B60N 2/22

(54) **SEAT RECLINER FOR VEHICLE**

(30) Priority: 02.10.2024 KR 20240134025
(71) Applicant: Hyundai Transys Inc., Chungcheongnam-do 31930 (KR)
(72) Inventor: LEE, Young Sun, 18463 Hwaseong-si, Gyeonggi-do (KR)
(74) Representative: Viering, Jentschura & Partner mbB Patent- und Rechtsanwälte

(57) **Abstract**

A seat recliner for a vehicle includes a first flange (10) having a first engagement portion (11) including gear teeth and provided on one surface of the first flange, a second flange (20) having a second engagement portion (21) including gear teeth and provided on one surface of the second flange, an elastic member (30) positioned between the first flange and the second flange, a retainer (40) positioned adjacent to the first flange, a shaft (50) configured to penetrate a center of the first flange, a center of the second flange, and a center of the retainer, and a pressing member (60) coupled to the shaft so as to be positioned between the first flange and the retainer, the pressing member being configured to allow the first engagement portion and the second engagement portion to engage with or disengage from each other while being rotated in a locking or unlocking direction by an operation of the shaft.

## Description

### CROSS-REFERENCE TO RELATED APPLICATIONS

This application claims priority to and the benefit of Korean Patent Application No. 10-2024-0134025 filed in the Korean Intellectual Property Office on October 02, 2024, the entire contents of which are incorporated herein by reference.

### TECHNICAL FIELD

The present disclosure relates to a seat recliner for a vehicle.

### BACKGROUND

In general, a seat recliner for a vehicle may be mounted at a portion where a seat cushion frame and a seatback frame are connected. The seat recliner for a vehicle may adjust an angle of a seatback in a forward/rearward direction with respect to a seat cushion.

The seat recliner for a vehicle may have a structure including a first flange. The first flange has a plurality of guide parts, guide spaces, and a plurality of lock gears. The plurality of guide parts are spaced apart from one another. The guide spaces are formed between the plurality of guide parts. The plurality of lock gears are disposed in the guide spaces of the first flange, are configured to slide forward and rearward in a radial direction along the guide parts, and have external teeth formed at outer ends thereof. Two opposite surfaces of each lock gear slide while coming into contact with lateral surfaces of the guide part, which respectively face the lock gear, in a state in which the two opposite surfaces of the lock gear are assembled to the lateral surfaces of the guide part. Assembling guides recessed laterally are formed in partial sections of lateral surfaces of the lock gears or the lateral surfaces of the guide parts, such that the lock gears are assembled between the guide parts by means of the assembling guides.

However, there is a problem in that the seat recliner for a vehicle in the related art requires a larger number of components compared to functions thereof, and engagement strength of the lock gear is structurally insufficient.

### [Document of Related Art]

### [Patent Document]

(Patent Document 1) Korean Patent Application Laid-Open No. 10-2019-0078376 (published on July 4, 2019)

### SUMMARY OF THE DISCLOSURE

The present disclosure has been made in an effort to provide a seat recliner for a vehicle, the seat recliner being capable of increasing a locking force by means of an engagement structure between a first engagement portion of a first flange and a second engagement portion of a second flange and reducing costs by reducing the number of components.

In order to achieve the above-mentioned object, the present disclosure provides a seat recliner for a vehicle, the seat recliner including: a first flange having a first engagement portion including gear teeth, the first engagement portion being positioned on one surface of the first flange; a second flange having a second engagement portion including gear teeth, the second engagement portion being positioned on one surface of the second flange; an elastic member positioned between the first flange and the second flange; a retainer positioned adjacent to the first flange; a shaft penetrating a center of the first flange, a center of the second flange, and a center of the retainer; and a pressing member coupled to the shaft and positioned between the first flange and the shaft, the pressing member being configured to allow the first engagement portion and the second engagement portion to engage with or disengage from each other while being rotated in a locking direction or an unlocking direction by an operation of the shaft.

In addition, a plurality of first inclined embossed portions may be positioned on one surface of the pressing member directed toward the retainer, and the plurality of first inclined embossed portions may be in contact with a plurality of second inclined embossed portions positioned on the retainer.

In addition, when the pressing member rotates in the locking direction, the plurality of first inclined embossed portions may move in the locking direction in a state in which the plurality of first inclined embossed portions are, respectively, in contact with the plurality of second inclined embossed portions positioned on the retainer, and the pressing member may be configured to press the first flange while being pushed in a direction toward the first flange.

In addition, the first flange may be configured to be pushed in a direction toward the second flange by being pressed by the pressing member, and the first engagement portion may be configured to engage with the second engagement portion.

In addition, the elastic member may be configured to be pressed by the first flange pushed in the direction toward the second flange.

In addition, when the pressing member rotates in the unlocking direction, the plurality of first inclined embossed portions may be configured to move in the unlocking direction, a position of each of the plurality of first inclined embossed portions may be configured to be coincident with a position of each of the plurality of second inclined embossed portions along an axial direction of the seat recliner to eliminate a pressing force applied to the first flange, and the first flange and the second flange may be configured to be moved away from each other by an elastic restoring force of the elastic member in conjunction with elimination of the pressing force, such that the first engagement portion and the second engagement portion are disengaged.

In addition, the first flange may include: a first annular protruding rim protruding from an edge portion of the one surface of the first flange; and a first accommodation portion surrounded by the first annular protruding rim and having a first surface to accommodate the elastic member thereon, and the first engagement portion may be positioned on the first annular protruding rim.

In addition, the second flange may include: a second annular protruding rim protruding from an edge portion of the one surface of the second flange; and a second accommodation portion surrounded by the second annular protruding rim and having a second surface to accommodate the elastic member thereon, and the second engagement portion may be positioned on the second annular protruding rim.

In addition, the elastic member may be a wave washer.

In addition, a coupling protrusion may be positioned on another surface of the first flange opposite to the one surface of the first flange, and the coupling protrusion may be coupled to a coupling hole defined in the retainer.

In addition, a spring may be coupled to the shaft, and one end of the spring may be caught by a catching protrusion positioned on another surface of the second flange opposite to the one surface of the second flange.

In addition, a through-hole is defined at a center of the pressing member, and the through-hole may may have an angular shape that conforms to a cross-section of the shaft perpendicular to a longitudinal axis of the shaft.

In addition, the one surface of the first flange and the one surface of the second flange may face each other.

In addition, the spring may be coiled in a direction perpendicular to a longitudinal axis of the shaft, and another end of the spring may be coiled to define a hole that has an angular shape that conforms to a cross-section of the shaft perpendicular to a longitudinal axis of the shaft, the shaft being coupled to the another end of the spring by penetrating the hole defined by the another end of the spring.

In addition, each of the plurality of first inclined embossed portions may be rounded along a direction of rotation of the pressing member, and an inclined surface of each of the plurality of first inclined embossed portions may incline in the direction of rotation of the pressing member.

In addition, the plurality of first inclined embossed portions may be spaced apart from one another around the shaft penetrating the pressing member, and the plurality of second inclined embossed portions may be spaced apart from one another around the shaft penetrating the retainer.

In addition, the retainer may have a recessed portion recessed in an axial direction of the retainer to accommodate the pressing member therein, and the plurality of second inclined embossed portions may be positioned on the recessed portion.

In addition, a height of a top of an inclined surface of each of the plurality of second inclined embossed portions may be lesser than a depth of the recessed portion.

In addition, the recessed portion may have a shape corresponding to a shape of the pressing member.

In addition, the coupling hole may extend in a rounded manner around a central axis of the retainer, the coupling hole having a length larger than a width of the coupling protrusion, the coupling protrusion being configured to move within a predetermined range defined by the length of the coupling hole. The present disclosure may significantly increase the locking force by means of the engagement structure between the first engagement portion of the first flange and the second engagement portion of the second flange.

In addition, the present disclosure may reduce costs by reducing the number of components of the seat recliner for a vehicle.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a perspective view of a seat recliner for a vehicle according to an exemplary embodiment of the present disclosure.
FIG. 2 is an exploded perspective view of the seat recliner for a vehicle according to the exemplary embodiment of the present disclosure.
FIG. 3 is a view illustrating a locking operation of a pressing member according to the exemplary embodiment of the present disclosure.
FIG. 4 is a view illustrating a process in which first inclined embossed portions of the pressing member according to the exemplary embodiment of the present disclosure move in a locking direction in a state in which the first inclined embossed portions are in contact with second inclined embossed portions of a retainer.
FIG. 5 is a view illustrating a state in which a first engagement portion of a first flange and a second engagement portion of a second flange according to the exemplary embodiment of the present disclosure engage with each other.
FIG. 6 is a view illustrating an unlocking operation of the pressing member according to the exemplary embodiment of the present disclosure.
FIG. 7 is a view illustrating a state in which the first inclined embossed portions of the pressing member according to the exemplary embodiment of the present disclosure are aligned with or correspond to the second inclined embossed portions of the retainer.
FIG. 8 is a view illustrating a state in which the first engagement portion of the first flange and the second engagement portion of the second flange according to the exemplary embodiment of the present disclosure are disengaged.
FIG. 9 is a front view of FIG. 1.
FIG. 10 is a rear view of FIG. 1.

It should be understood that the appended drawings are not necessarily to scale, presenting a somewhat simplified representation of various features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION

Hereinafter, exemplary embodiments of the present disclosure will be described in detail with reference to the accompanying drawings. First, in assigning reference numerals to constituent elements of the respective drawings, it should be noted that the same constituent elements will be designated by the same reference numerals, if possible, even though the constituent elements are illustrated in different drawings. In addition, in the description of the present disclosure, the specific descriptions of publicly known related configurations or functions will be omitted when it is determined that the specific descriptions may obscure the subject matter of the present disclosure. Further, the exemplary embodiments of the present disclosure will be described below, but the technical spirit of the present disclosure is not limited thereto and may, of course, be modified and variously carried out by those skilled in the art.

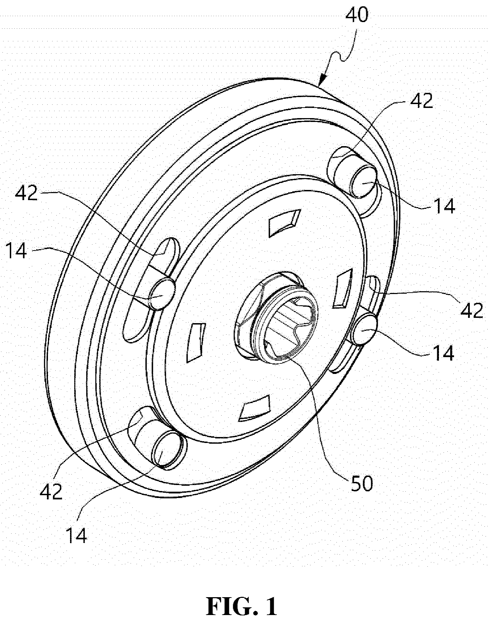

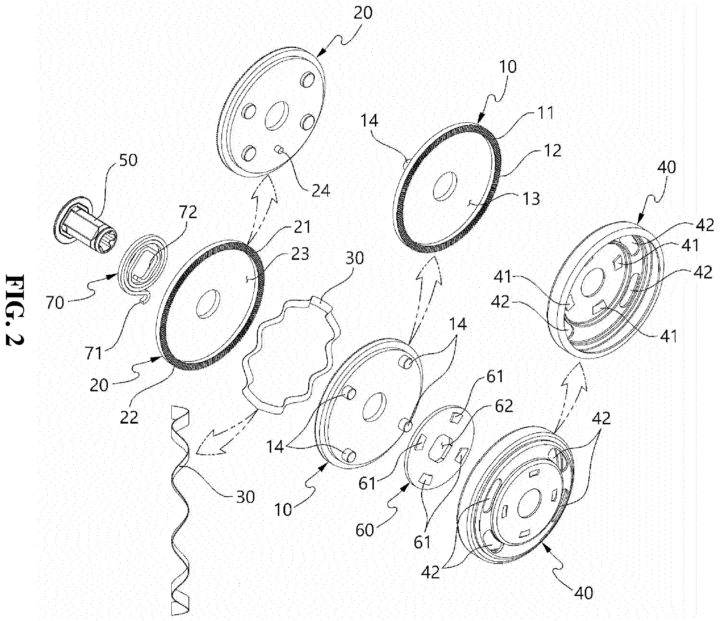

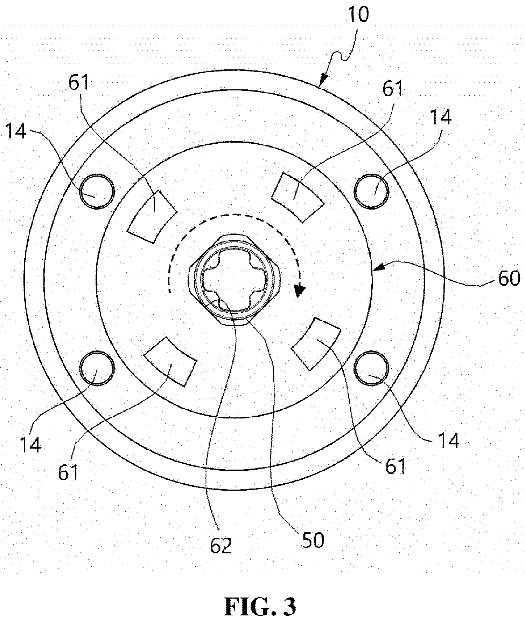

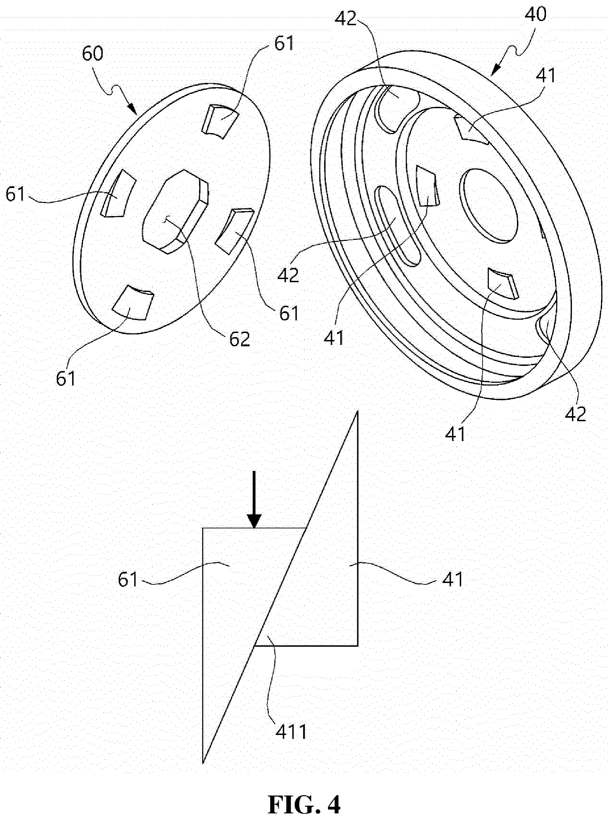

FIG. 1 is a perspective view of a seat recliner for a vehicle according to an exemplary embodiment of the present disclosure. FIG. 2 is an exploded perspective view of the seat recliner for a vehicle according to the exemplary embodiment of the present disclosure. FIG. 3 is a view illustrating a locking operation of a pressing member according to the exemplary embodiment of the present disclosure. FIG. 4 is a view illustrating a process in which first inclined embossed portions of the pressing member according to the exemplary embodiment of the present disclosure move in a locking direction in a state in which the first inclined embossed portions are in contact with second inclined embossed portions of a retainer.

As illustrated in FIGS. 1 to 4, a seat recliner for a vehicle of the present disclosure may include a first flange 10, a second flange 20 configured to be opposite to the first flange 10, an elastic member 30 disposed between the first flange 10 and the second flange 20 and configured to elastically support the first flange 10 and the second flange 20, a retainer 40 positioned adjacent to the first flange 10, a shaft 50 configured to penetrate a center of the first flange 10, a center of the second flange 20, and a center of the retainer 40, and a pressing member 60 positioned between the first flange 10 and the shaft 50.

The first flange 10 may include a first annular protruding rim 12 and a first accommodation portion 13. The first annular protruding rim 12 may protrude from an edge portion of one surface of the first flange 10. A first engagement portion 11 including gear teeth may be formed on the first annular protruding rim 12. The first accommodation portion 13 may be formed inside the first annular protruding rim 12. One end of the elastic member 30 may be inserted into the first accommodation portion 13.

The second flange 20 may include a second annular protruding rim 22 and a second accommodation portion 23. The second annular protruding rim 22 may protrude from an edge portion of one surface of the second flange 20. A second engagement portion 21 including gear teeth may be formed on the second annular protruding rim 22. The second engagement portion 21 may engage with the first engagement portion 11. The second accommodation portion 23 may be formed inside the second annular protruding rim 22. The other end of the elastic member 30 may be inserted into the second accommodation portion 23.

For example, the elastic member 30 may be a wave washer. The elastic member 30 may be compressed while being pushed in a direction toward the second flange 20 by being pressed by the first flange 10. When a pressing force applied by the first flange 10 is eliminated, the compressed elastic member 30 may be restored to an original state.

The pressing member 60 may include first inclined embossed portions 61 and a through-hole 62. The first inclined embossed portions 61 may be provided as a plurality of first inclined embossed portions 61 formed on one surface of the pressing member 60. The first inclined embossed portion 61 may have an inclined surface. The through-hole 62 may be formed at a center of the pressing member 60. The through-hole 62 may have an angular shape that conforms to the shaft 50. The shaft 50 may be coupled to the through-hole 62.

The retainer 40 may be fixedly coupled to a seat frame (not illustrated). The retainer 40 may have second inclined embossed portions 41. The second inclined embossed portion 41 may have an inclined surface that conforms to the first inclined embossed portion 61.

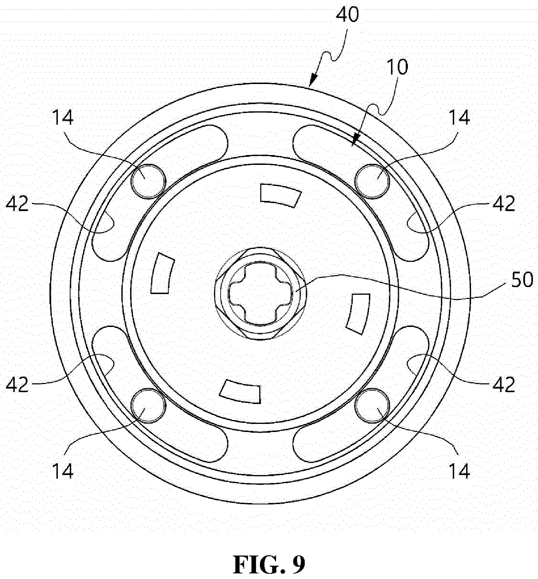

FIG. 9 is a front view of FIG. 1. As illustrated in FIG. 9, the retainer 40 may have coupling holes 42. Coupling protrusions 14 provided on the other surface of the first flange 10 may be inserted into the coupling holes 42.

The coupling hole 42 may be configured as a long hole larger than a width of the coupling protrusion 14. Therefore, the coupling protrusion 14 inserted and assembled into the coupling hole 42 may move within a limited range defined by the coupling hole 42.

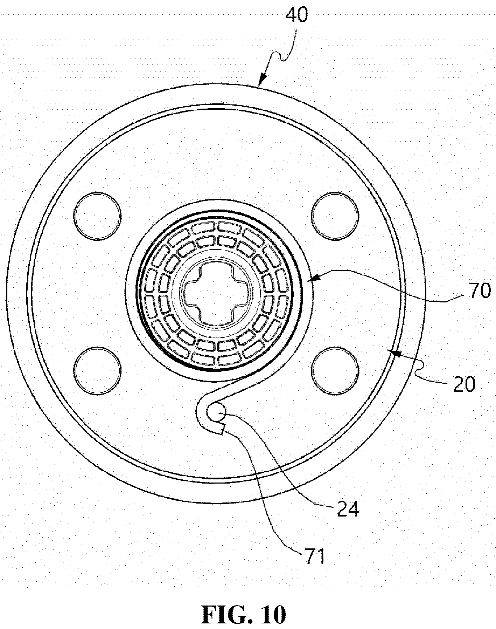

FIG. 10 is a rear view of FIG. 1. As illustrated in FIG. 10, a spring 70 may be coupled to the shaft 50. The spring 70 may be assembled so that one end 71 is caught by a catching protrusion 24 provided on the other surface of the second flange 20 in the state in which the spring 70 is coupled to the shaft 50. The other end 72 of the spring 70 coupled to the shaft 50 may have an angular shape that conforms to the shaft 50. For example, the spring 70 may be a spiral spring.

Next, a locking operation of the present disclosure will be described.

As illustrated in FIG. 3, when a rotational force is applied to the shaft 50, the shaft 50 may rotate in the locking direction. Because the shaft 50 is coupled to the through-hole 62 of the pressing member 60, the rotational force of the shaft 50 may be transmitted to the pressing member 60, and the pressing member 60 may rotate in the locking direction.

As illustrated in FIG. 4, when the pressing member 60 rotates in the locking direction, the first inclined embossed portions 61 of the pressing member 60 may move in the locking direction along the second inclined embossed portions 41 in a state in which the first inclined embossed portions 61 of the pressing member 60 are in contact and coincident with the second inclined embossed portions 41 of the retainer 40.

In this case, because the retainer 40 is fixed to the seat frame (not illustrated), the second inclined embossed portion 41 cannot move, and only the first inclined embossed portion 61 may move.

When the first inclined embossed portions 61 move in the locking direction that is a direction toward tops 411 of the inclined surfaces of the second inclined embossed portions 41, the pressing member 60 may press the first flange 10 while being pushed in the direction toward the first flange 10.

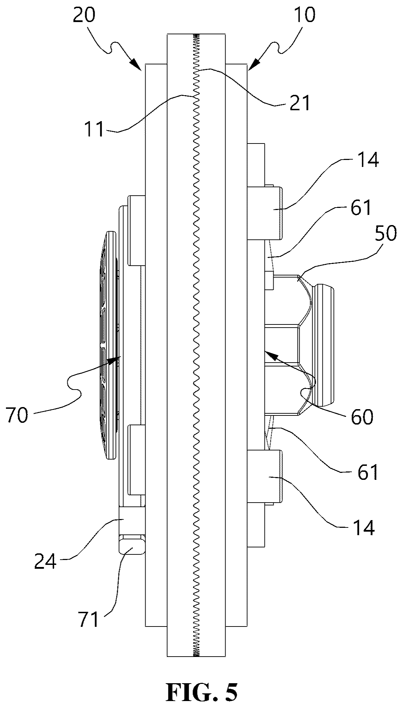

FIG. 5 is a view illustrating a state in which the first engagement portion of the first flange and the second engagement portion of the second flange according to the exemplary embodiment of the present disclosure engage with each other.

As illustrated in FIG. 5, when the pressing member 60 presses the first flange 10, the first flange 10 may be pushed in the direction toward the second flange 20, and the first engagement portion 11 of the first flange 10 may engage with the second engagement portion 21 of the second flange 20.

In this case, the elastic member 30 positioned between the first flange 10 and the second flange 20 may be compressed while being pushed in the direction toward the second flange 20 by being pressed by the first flange 10.

In a locked state in which the first engagement portion 11 and the second engagement portion 21 engage with each other, an angle of the seatback (not illustrated) cannot be adjusted.

The structure of the present disclosure in which the first engagement portion 11 of the first flange 10 engages with the second engagement portion 21 of the second flange 20 may maximize the locking force.

Next, an unlocking operation of the present disclosure will be described.

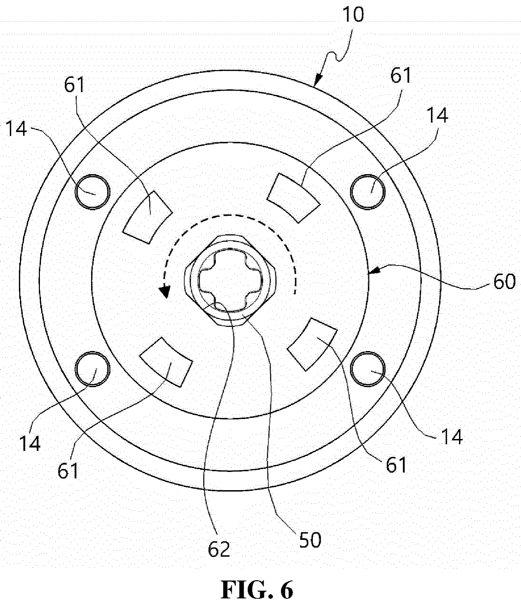

FIG. 6 is a view illustrating an unlocking operation of the pressing member according to the exemplary embodiment of the present disclosure.

As illustrated in FIG. 6, when a rotational force is applied to the shaft 50, the shaft 50 may rotate in an unlocking direction. Because the shaft 50 is coupled to the through-hole 62 of the pressing member 60, the rotational force of the shaft 50 may be transmitted to the pressing member 60, and the pressing member 60 may rotate in the unlocking direction.

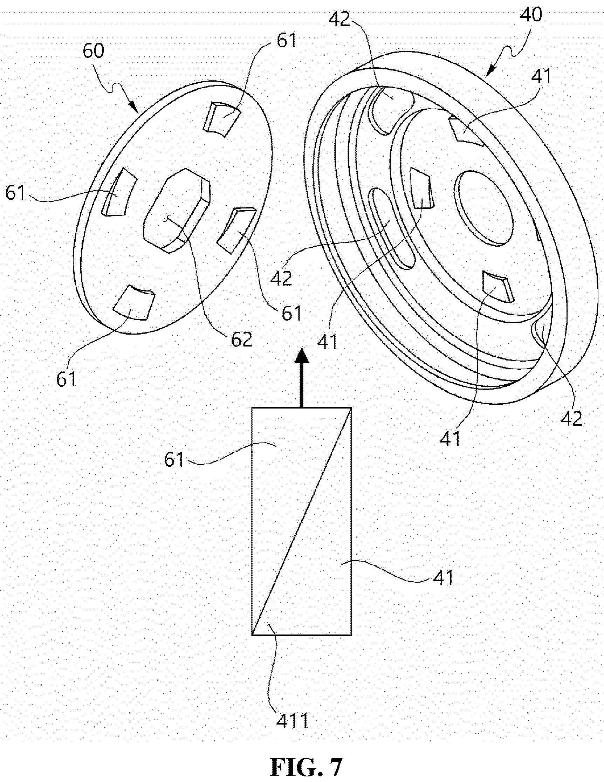

FIG. 7 is a view illustrating a state in which the first inclined embossed portions of the pressing member according to the exemplary embodiment of the present disclosure are aligned with or correspond to the second inclined embossed portions of the retainer.

As illustrated in FIG. 7, when the pressing member 60 rotates in the unlocking direction, the first inclined embossed portions 61 of the pressing member 60 may move in the unlocking direction, which is opposite to the direction toward the tops 411, along the inclined surfaces of the second inclined embossed portions 41 of the retainer 40, and the first inclined embossed portions 61 of the pressing member 60 may be coincident or aligned with and in contact with the inclined surfaces of the second inclined embossed portions 41. In other words, a position of each of the first inclined embossed portions 61 may be coincident with a position of each of the second inclined embossed portions 41 along an axial direction of the recliner, such that the lowest ends of the inclines of the first inclined embossed portions 61 coincide with the tops 411 of the inclines of the second inclined embossed portions 41.

The state in which the first flange 10 is pressed by the pressing member 60 may be released when the pressing member 60 moves in the direction toward the retainer 40 during the process in which the first inclined embossed portions 61 and the second inclined embossed portions 41 become consistent with one another.

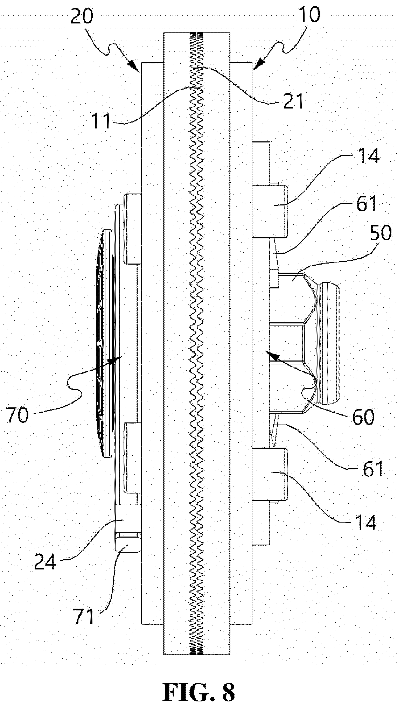

FIG. 8 is a view illustrating a state in which the first engagement portion of the first flange and the second engagement portion of the second flange according to the exemplary embodiment of the present disclosure are disengaged.

As illustrated in FIG. 8, when a pressing force applied to the first flange 10 is eliminated, the elastic member 30 between the first flange 10 and the second flange 20 may be restored to the original state, and the first flange 10 and the second flange 20 may be pushed in opposite directions.

When the first flange 10 and the second flange 20 are pushed in the opposite directions, an unlocked state may be implemented in which the first engagement portion 11 of the first flange 10 and the second engagement portion 21 of the second flange 20 are disengaged.

An angle of the seatback (not illustrated) may be adjusted in the unlocked state in which the first engagement portion 11 and the second engagement portion 21 are disengaged.

The above description is simply given for illustratively describing the technical spirit of the present disclosure, and those skilled in the art to which the present disclosure pertains will appreciate that various modifications, changes, and substitutions are possible without departing from the essential characteristics of the present disclosure. Accordingly, the embodiments disclosed in the present disclosure and the accompanying drawings are intended not to limit but to describe the technical spirit of the present disclosure, and the scope of the technical spirit of the present disclosure is not limited by the embodiments and the accompanying drawings. The protective scope of the present disclosure should be construed based on the following claims, and all the technical spirit in the equivalent scope thereto should be construed as falling within the scope of the present disclosure.

As described above, the exemplary embodiments have been described and illustrated in the drawings and the specification. The exemplary embodiments were chosen and described in order to explain certain principles of the disclosure and their practical application, to thereby enable others skilled in the art to make and utilize various exemplary embodiments of the present disclosure, as well as various alternatives and modifications thereof. As is evident from the foregoing description, certain aspects of the present disclosure are not limited by the particular details of the examples illustrated herein, and it is therefore contemplated that other modifications and applications, or equivalents thereof, will occur to those skilled in the art. Many changes, modifications, variations and other uses and applications of the present construction will, however, become apparent to those skilled in the art after considering the specification and the accompanying drawings. All such changes, modifications, variations and other uses and applications which do not depart from the spirit and scope of the disclosure are deemed to be covered by the disclosure which is limited only by the claims which follow.

### [Description of Reference Numerals]

10: First flange
11: First engagement portion
12: First annular protruding rim
13: First accommodation portion
14: Coupling protrusion
20: Second flange
21: Second engagement portion
22: Second annular protruding rim
23: Second accommodation portion
24: Catching protrusion
30: Elastic member
40: Retainer
41: Second inclined embossed portion
411: Top
42: Coupling hole
50: Shaft
60: Pressing member
61: First inclined embossed portion
62: Through-hole
70: Spring
71: One end
72: The other end

## Claims

1. A seat recliner for a vehicle, the seat recliner comprising:
a first flange having a first engagement portion comprising gear teeth, the first engagement portion being positioned on one surface of the first flange;
a second flange having a second engagement portion comprising gear teeth, the second engagement portion being positioned on one surface of the second flange;
an elastic member positioned between the first flange and the second flange;
a retainer positioned adjacent to the first flange;
a shaft penetrating a center of the first flange, a center of the second flange, and a center of the retainer; and
a pressing member coupled to the shaft and positioned between the first flange and the retainer, the pressing member being configured to allow the first engagement portion and the second engagement portion to engage with or disengage from each other while being rotated in a locking direction or an unlocking direction by an operation of the shaft.

2. The seat recliner of claim 1, wherein a plurality of first inclined embossed portions are positioned on one surface of the pressing member directed toward the retainer, and the plurality of first inclined embossed portions are in contact with a plurality of second inclined embossed portions positioned on the retainer, wherein, optionally, each of the plurality of first inclined embossed portions is rounded along a direction of rotation of the pressing member, and an inclined surface of each of the plurality of first inclined embossed portions inclines in the direction of rotation of the pressing member.

3. The seat recliner of claim 2, wherein when the pressing member rotates in the locking direction, the plurality of first inclined embossed portions move in the locking direction in a state in which the plurality of first inclined embossed portions are, respectively, in contact with the plurality of second inclined embossed portions positioned on the retainer, and the pressing member is configured to press the first flange while being pushed in a direction toward the first flange.

4. The seat recliner of anyone of claims 1-3, wherein the first flange is configured to be pushed in a direction toward the second flange by being pressed by the pressing member, and the first engagement portion is configured to engage with the second engagement portion.

5. The seat recliner of anyone of claims 1-4, wherein the elastic member is configured to be pressed by the first flange pushed in the direction toward the second flange.

6. The seat recliner of claim 2 or 3, or of anyone of claims 4-5 provided that in combination with claim 2
wherein when the pressing member rotates in the unlocking direction,
the plurality of first inclined embossed portions are configured to move in the unlocking direction,
a position of each of the plurality of first inclined embossed portions is configured to be coincident with a position of each of the plurality of second inclined embossed portions along an axial direction of the seat recliner to eliminate a pressing force applied to the first flange, and
the first flange and the second flange are configured to be moved away from each other by an elastic restoring force of the elastic member in conjunction with elimination of the pressing force, such that the first engagement portion and the second engagement portion are disengaged.

7. The seat recliner of anyone of claims 1-6,
wherein the first flange comprises:
a first annular protruding rim protruding from an edge portion of the one surface of the first flange; and
a first accommodation portion surrounded by the first annular protruding rim and having a first surface to accommodate the elastic member thereon, and
wherein the first engagement portion is positioned on the first annular protruding rim.

8. The seat recliner of anyone of claims 1-7,
wherein the second flange comprises:
a second annular protruding rim protruding from an edge portion of the one surface of the second flange; and
a second accommodation portion surrounded by the second annular protruding rim and having a second surface to accommodate the elastic member thereon, and
wherein the second engagement portion is positioned on the second annular protruding rim.

9. The seat recliner of anyone of claims 1-8, wherein the elastic member is a wave washer.

10. The seat recliner of anyone of claims 1-9, wherein a coupling protrusion is positioned on another surface of the first flange opposite to the one surface of the first flange, and the coupling protrusion is coupled to a coupling hole defined in the retainer, wherein, optionally, the coupling hole extends in a rounded manner around a central axis of the retainer, the coupling hole having a length larger than a width of the coupling protrusion, the coupling protrusion being configured to move within a predetermined range defined by the length of the coupling hole.

11. The seat recliner of anyone of claims 1-10, wherein a spring is coupled to the shaft, and one end of the spring is caught by a catching protrusion positioned on another surface of the second flange opposite to the one surface of the second flange, wherein, optionally, the spring is coiled in a direction perpendicular to a longitudinal axis of the shaft, and another end of the spring is coiled to define a hole that has an angular shape that conforms to a cross-section of the shaft perpendicular to a longitudinal axis of the shaft, the shaft being coupled to the another end of the spring by penetrating the hole defined by the another end of the spring.

12. The seat recliner of anyone of claims 1-11, wherein a through-hole is defined at a center of the pressing member, and the through-hole has an angular shape that conforms to a cross-section of the shaft perpendicular to a longitudinal axis of the shaft.

13. The seat recliner of anyone of claims 1-12, wherein the one surface of the first flange and the one surface of the second flange face each other.

14. The seat recliner of claim 2 or 3, or of anyone of claims 4-13 provided that in combination with claim 2, wherein the plurality of first inclined embossed portions are spaced apart from one another around the shaft penetrating the pressing member, and the plurality of second inclined embossed portions are spaced apart from one another around the shaft penetrating the retainer, wherein, optionally, the recessed portion has a shape corresponding to a shape of the pressing member..

15. The seat recliner of claim 2 or 3, or of anyone of claims 4-14 provided that in combination with claim 2, wherein the retainer has a recessed portion recessed in an axial direction of the retainer to accommodate the pressing member therein, and the plurality of second inclined embossed portions are positioned on the recessed portion, wherein, optionally, a height of a top of an inclined surface of each of the plurality of second inclined embossed portions is lesser than a depth of the recessed portion.
